# EUROPÄISCHE PATENTSCHRIFT

(11) **EP 4 057 500 B1**
(45) Veröffentlichungstag und Bekanntmachung des Hinweises auf die Patenterteilung: **18.12.2024**
(21) Anmeldenummer: 21162188.3
(22) Anmeldetag: 12.03.2021
(51) Int. Cl.: H02P 27/14, H02P 29/50, H02M 1/12, H02M 1/42

(54) **STROMRICHTER SOWIE VERFAHREN ZU DESSEN BETRIEB**
INVERTER AND METHOD FOR THE OPERATION OF SAME
CONVERTISSEUR, AINSI QUE SON PROCÉDÉ DE FONCTIONNEMENT

(43) Veröffentlichungstag der Anmeldung: 14.09.2022
(73) Patentinhaber: Siemens Energy Global GmbH & Co. KG, 81739 München (DE)
(72) Erfinder: Schön, Andre, 91058 Erlangen (DE)

(56) Entgegenhaltungen:
- EP-A1- 2 209 199
- CN-A- 104 022 631
- US-A1- 2013 033 907

## Beschreibung

Die Erfindung betrifft ein Verfahren zum Betreiben eines Stromrichters.

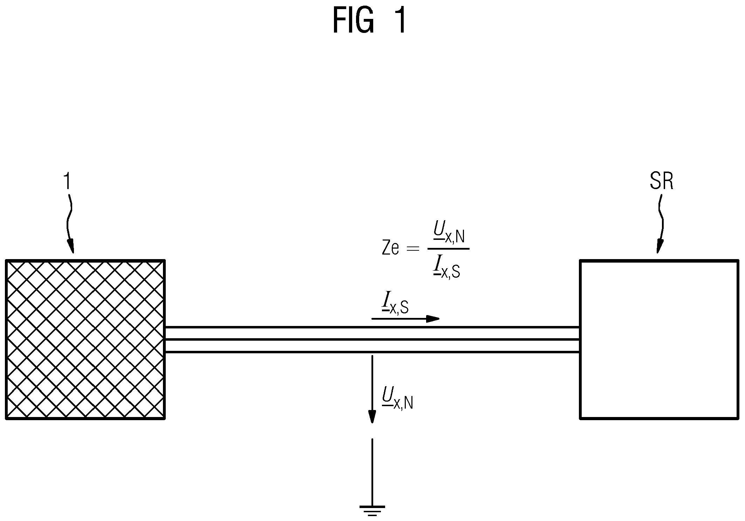

Stromrichter, insbesondere leistungselektronische Spannungsumrichter, wie zum Beispiel modulare Mehrstufenumrichter, haben auf Grund einer aktiven Regelung von wechselspannungsseitigem Klemmenstrom und Klemmenspannung einen durch die gewählten Regelungsstrategien bestimmten Verlauf einer Eingangsimpedanz Ze. In Figur 1 ist die Grundsätzliche Anordnung eines an ein Wechselspannungsnetz 1 angeschlossenen Stromrichters SR dargestellt. Dabei werden der wechselspannungsseitige Strom mit Ix,S und die wechselspannungsseitige Spannung mit Ux,N bezeichnet, aus deren Verhältnis sich die Eingangsimpedanz Ze ergibt. Der Stromrichter SR kann zur Stabilisierung der Spannung Ux,N eingesetzt sein oder eine Gleichspannungsseite aufweisen, so dass mittels des Stromrichters SR die Spannung Ux,N in eine Gleichspannung umgewandelt werden kann.

Im Betrieb des Stromrichters liegt ein Fokus der Regelung häufig auf der Grundfrequenz des angeschlossenen Wechselspannungsnetzes, was in vielen Fällen zu einer ungünstigen Eingangsimpedanz bei z.B. Oberschwingungen führt. Dabei kann die ungünstige Eingangsimpedanz dazu führen, das Netzharmonische verstärkt in Strom- oder Spannungsamplitude oder im ungünstigsten Fall sogar Resonanzen angeregt werden, die ein Abschalten der Anlage notwendig machen. Ausgedehnte Hochspannungsnetze, Kabelnetze (besonders Offshore) und umrichterdominierte AC-Netze sind dabei besonders anfällig für Oszillation und Verzerrungsströme.

Grundsätzlich kann ein hinreichend schnelles Regelungssystem den Eingangsstrom bzw. die Klemmenspannung des Umrichters durch eine entsprechende Sollwertvorgabe regeln. Diese Funktion, üblicherweise als "Active Filter" bezeichnet, ist besonders bei Nieder- und Mittelspannungsumrichtern verbreitet. Dazu wird eine unterlagerte Stromregelung um zusätzliche, äußere Regelschleifen erweitert (Kaskadierte Struktur), die eine stationär genaue Einregelung dieser Sollwerte ermöglicht. Die aktive Unterdrückung von Harmonischen zeigt in der Regel jedoch eine geringe Dynamik, da die entsprechenden Größen immer erst gemessen und verarbeitet werden müssen. Dies schränkt darüber hinaus auch den regelbaren Frequenzbereich ein, da hierbei auftretende Totzeiten für höhere Harmonische zwangsläufig zu Instabilität führen. Darüber hinaus ist der Sollwert für Oberschwingungen im Allgemeinen unbekannt und von variablen Größen im angeschlossenen Wechselspannungsnetz abhängig. Eine falsche Sollwertvorgabe kann hierbei zu Instabilität führen.

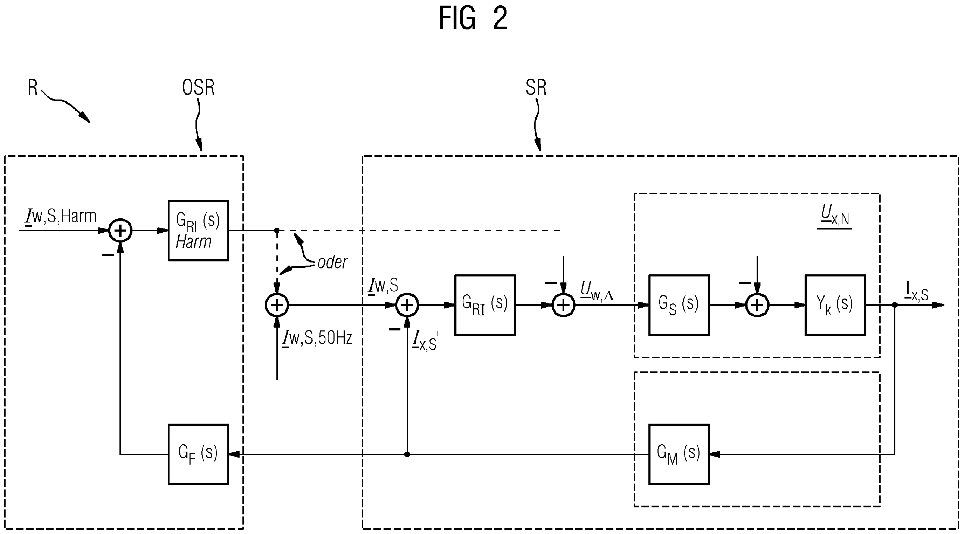

In Figur 2 ist eine Regelungseinrichtung 3 (z.B. für den Stromrichter 2 der Figur 1) nach dem Stand der Technik dargestellt, mit der eine mögliche Implementierung der Stromregelung realisierbar ist. Die Regelungseinrichtung 3 umfasst einen Oberschwingungsregler OSR sowie einen Stromregelkreis SR. Dabei bezeichnen GRI(s)harm einen Stromregler für Harmonische, GF(s) einen Frequenzfilter für Harmonische, GRI(s) einen Grundschwingungs-Stromregler, GM(s) eine Messeinrichtung bzw. ein Messmodul, Yk(s) eine Admittanz des AC-Systems, Gs(s) einen Modulator für eine Spannungsstellung, Iw,S,50Hz einen Grundschwingungssollstrom (hier für den Beispielfall eines Wechselspannungsnetzes mit einer Nennfrequenz von 50Hz), Iw,S,harm einen Sollstrom für jeweilige Harmonische, Ux,N eine wechselspannungsseitige Spannung, Uw,Delta eine Sollspannung des Modulators, Iw,S einen wechselspannungsseitigen Sollstrom und Ix,S einen wechselspannungsseitigen Iststrom. Der klassische Stromregler für die Grundschwingungen (hier 50Hz) wird um einen überlagerten Stromregler für eine Harmonische erweitert. Um den Oberschwingungsstrom Regeln zu können, wird ein harmonischer Anteil aus dem gemessenen Strom herausgefiltert und mit einem Sollwert für diese Harmonische verglichen. Aus der Regeldifferenz wird entweder ein zusätzlicher Sollwert für den unterlagerten Grundschwingsstromregler oder direkt eine Sollspannung für den Modulator berechnet. Hierbei muss die Dynamik des unterlagerten Reglers kompensiert werden. Die Struktur ist auf Grund der Filterung und des zusätzlichen Regelkreises anfällig für Instabilitäten und i.A. wenig robust. Die Eingangsimpedanz aus Sicht des AC-Netzes hängt immer vom aktuellen Betriebspunkt und dem Sollwert der Harmonischen ab.

Aus der EP 2 209 199 A1 ist ein Verfahren zum Regeln eines Stromrichters bekannt, bei dem zum Bedämpfen von Harmonischen einer Wechselspannung eine Tiefpassfilterung der Wechselspannung durchgeführt wird.

Weitere Verfahren zum Minimieren von Harmonischen sind in der US 2013/033907 A1 und der CN 104 022 631 A offenbart.

Die Aufgabe der Erfindung ist es, ein artgemäßes Verfahren vorzuschlagen, das einen möglichst zuverlässigen Betrieb des Stromrichters ermöglicht.

Die Aufgabe wird durch ein Verfahren gemäß dem Anspruch 1 gelöst.

Erfindungsgemäß wird vorgeschlagen, ein passives deterministisches Umrichterverhalten durch eine direkte Modifikation der Eingangsimpedanz zu erzeugen, und zwar allein auf Grund des unterlagerten Stromregelsystem, ohne dass dafür zusätzliche Messgrößen erfasst oder Sollwerte berechnet werden müssen. Insbesondere wird das Modifizieren der Eingangsimpedanz ohne eine Sollwertvorgabe durchgeführt (daher die Bezeichnung ,passiv'). Der unterlagerte Stromregler (oder alternativ auch der unterlagerte Spannungsregler) wird dabei geeigneterweise um Parallelstrukturen erweitert, die eine passive Regelungsreaktion auf z.B. den Klemmenstrom des Umrichters produzieren, ohne dass dafür konkrete Regelungseingriffe von außen notwendig werden. Die Modifikation der Eingangsimpedanz mittels der passiven Regelungsreaktion wird zweckmäßigerweise dadurch erreicht, dass ein Iststrom in eine Korrekturspannung übersetzt wird, die einer vorgegebenen Impedanz Zv0 entspricht (diese kann daher als virtuelle Impedanz' bezeichnet werden). Diese Korrekturspannung wird zu der Ausgangsspannung der Grundschwingungsregelung hinzuaddiert, unter Gewinnung einer Stellspannung bzw. einer Sollspannung für den Modulator des Stromrichters. Mit dem erfindungsgemäßen Verfahren können die Nachteile der aus dem Stand der Technik bekannten Lösung vermieden werden. Eine Gefahr einer unbeabsichtigten Resonanzanregung in an die geregelte Frequenz direkt angrenzenden, nicht betrachteten Frequenzbereichen kann vorteilhaft vermieden werden. Die erzielte Filterwirkung ist nahezu instantan und nur durch die Dynamik der Spannungsstellung (des Modulators) begrenzt.

Vorzugsweise wird die Eingangsimpedanz innerhalb wenigstens eines vorbestimmten Frequenzbereiches modifiziert (es ist möglich, mehrere Frequenzbereiche parallel zu modifizieren). Mittels einer zusätzlichen Regelungsstruktur (auch als Parallelstruktur bezeichnet) können die Eingangsimpedanz für spezifische Frequenzen, oder auch breitbandig für definierte Frequenzbereiche auf definierte Werte anpassen. Auf diese Weise kann eine selektive und an die jeweilige Anwendung bzw. auf das jeweilige Netzverhalten angepasste Regelung erreicht werden.

Bevorzugt entspricht eine Mittenfrequenz des vorbestimmten Frequenzbereiches einem ganzzahligen Vielfachen einer Netzfrequenz. Die Mittenfrequenz liegt in der Mitte des dem vorbestimmten Frequenzbereich entsprechenden Abschnittes in der Frequenzachse. Hierbei ist eine besonders effiziente Unterdrückung von Harmonischen erzielbar.

Gemäß einer Ausführungsform der Erfindung entspricht Modifizieren einem Erhöhen eines Realteils der Eingangsimpedanz. Vorzugsweise wird durch das Modifizieren ein hoher positiver ohmscher Anteil der Eingangsimpedanz für den definierten Bereich erzeugt. Auf diese Weise kann eine Schwingungsneigung möglicher Resonanzstellen im angeschlossenen AC-Netz effektiv gedämpft werden. Die virtuelle Impedanz kann dabei frequenzselektiv auf eine spezifischen Oberschwingung bzw. in einem definierten Frequenzband um eine definierte Oberschwingung ohne exakte Sollwertvorgabe wirken und die Eingangsimpedanz des Umrichters frequenzselektiv modifizieren. Darüber hinaus können Totzeiten, die im Regelkreis aus Grund von Messung, Regelungssystem, Spannungsstellung, etc. auftreten, direkt kompensiert werden und so Frequenzbereiche erreicht werden, die mit dem Ansatz nach Stand der Technik nicht erreicht werden können.

Insbesondere kann es von Vorteil sein, wenn der Realteil derart angehoben wird, dass der Realteil im gesamten vorgegebenen Frequenzbereich, bevorzugt im gesamten Frequenzbereich oberhalb der Grundschwingung, positive Werte annimmt. Auf diese Weise kann eine Anregung von Resonanzen aufgrund negativer ohmscher Anteile der Impedanz vermieden werden.

Erfindungsgemäß wird zum Regeln einer Stromrichterstromes eine Stellspannung bestimmt, wobei die Stellspannung mittels einer Impedanzfunktion um einen Korrekturfaktor (Korrekturspannung) modifiziert wird, wobei die Impedanzfunktion unter Vorgabe eines Frequenzbereiches einem eingangsseitig bereitgestellten Stromwert ausgangsseitig einen eindeutigen Korrekturwert zuordnet. Hierbei enthält die Impedanzfunktion eine Zielvorgabe für die (komplexwertige) Eingangsimpedanz zweckmäßigerweise als festen Parameter implementiert, wodurch eine Umparametrierung auf unterschiedliche Zielvorgaben für die Eingangsimpedanz grundsätzlich ermöglicht ist. Die Impedanzfunktion kann beispielsweise in einem eigenen Modul der Regelung implementiert sein. Die Impedanzfunktion hat zwei, bevorzugt genau zwei, Eingangsparameter, nämlich die Frequenz, bzw. den Frequenzbereich sowie den Stromwert, der vorzugsweise dem gemessenen Wert des Iststromes entspricht. Die Vorgabe eines Sollwertes ist hierbei nicht vorgesehen. Ändern sich die Netzparameter des an den Stromrichter angeschlossenen Wechselspannungsnetzes, so kann der Frequenzbereich dementsprechend angepasst werden. Die Impedanzfunktion umfasst eine vorgegebene Korrespondenz zwischen dem Stromwert und dem Korrekturwert für alle für den Betrieb des Stromrichters relevanten Frequenzen.

Geeigneterweise wird das Modifizieren der Eingangsimpedanz zeitdynamisch wiederholt durchgeführt. Somit kann in der Zeit eine Anpassung an dynamische Vorgänge im Netz erzielt werden. Das Modifizieren bzw. die zugehörige Datenverarbeitung kann der gleichen Zeittaktung unterliegen wie die übrige Stromrichterregelung.

Gemäß einer Ausführungsform der Erfindung kann eine Mitsystemimpedanz und eine und Gegensystemimpedanz gleich modifiziert werden. Die virtuelle Impedanz Zv0 ist vorzugsweise rein reell, kann aber auch induktiv oder kapazitiv sein. Das Mit- und Gegensystem (bezogen auf die wechselspannungsseitige Spannung) können grundsätzlich getrennt und unabhängig voneinander modifiziert werden. In einer einfachen Ausführung werden das Mit- und das Gegensystem auf die gleiche Weise bzw. um jeweils den gleichen Betrag modifiziert. Alternativ können die Mitsystemimpedanz und die Gegensystemimpedanz jeweils unterschiedlich modifiziert werden. Beliebig viele virtuelle Impedanzen können parallel implementiert werden. Die Zielfrequenz der Modifikation ist vorzugsweise ein ganzzahliges Vielfaches der Grundschwingung, kann aber auch ein beliebiges reelles vielfaches sein.

Die Erfindung betrifft ferner einen Stromrichter mit einer Regelungseinrichtung.

Die Aufgabe der Erfindung besteht darin, einen solchen Stromrichter anzugeben, der möglichst zuverlässig im Betrieb ist.

Die Aufgabe wird durch einen Stromrichter gemäß dem Anspruch 9 gelöst, dass die Regelungseinrichtung dazu eingerichtet ist, mittels einer passiven Regelungsreaktion eine Eingangsimpedanz am Stromrichter zu modifizieren.

Die Vorteile des erfindungsgemäßen Stromrichters ergeben sich insbesondere aus den Vorteilen, die im Zusammenhang mit dem erfindungsgemäßen Verfahren erläutert wurden.

Der Stromrichter ist vorzugsweise ein modularer Mehrstufenumrichter, aufweisend Stromrichterarme, die jeweils eine Reihenschaltung von Schaltmodulen umfassen. Jedes Schaltmodul umfasst einen schaltmoduleigenen Energiespeicher sowie mehrere Halbleiterschalter (z.B. IGBT, IGCT oder andere einschaltbare Halbleiterschalter). Die Anordnung der Halbleiterschalter ermöglicht eine Überbrückung bzw. eine Zuschaltung des Energiespeichers (z.B. Kondensators) in den Strompfad des zugehörigen Stromrichterarms.

Die Erfindung wird nachfolgend anhand von Ausführungsbeispielen weiter erläutert, die in den Figuren 1 bis 7 dargestellt sind.

Figur 3 zeigt ein Ausführungsbeispiel eines erfindungsgemäßen Stromrichters in einer schematischen Darstellung;

Figur 4 zeigt ein Ausführungsbeispiel einer Regelungseinrichtung in einer schematischen Darstellung;

Figuren 5 bis 7 zeigen jeweils mögliche Wirkung einer Modifikation einer Eingangsimpedanz gemäß der Erfindung.

In Figur 1 ist ein Stromrichter 2 dargestellt, der ein modularer Mehrstufenstromrichter (MMC) ist. Der MMC ist im dargestellten Beispiel zur Umwandlung einer Wechselspannung eines Wechselspannungsnetzes 3, mit dem der MMC 2 mittels eines Netztransformators 4 verbunden ist, in eine Gleichspannung Ude umzuwandeln.

Der MMC 2 umfasst sechs Stromrichterarme 5-10, die miteinander in einer Doppelsternschaltung verbunden sind. Jeder der gleichartig aufgebauten Stromrichterarme 5-10 umfasst zwei Arminduktivitäten 11, 12 sowie je eine Reihenschaltung zweipoliger Schaltmodule SM. In dem in Figur 1 dargestellten Ausführungsbeispiel sind alle Schaltmodule SM gleichartig aufgebaut, was jedoch im Allgemeinen nicht notwendig ist. Auch die Anzahl der Schaltmodule SM in jedem Stromrichterzweig 5-10 ist grundsätzlich beliebig und an die jeweilige Anwendung anpassbar. Die Schaltmodule SM können beispielsweise Vollbrücken-Schaltmodule oder Halbbrücken-Schaltmodule sein. Jedes Schaltmodul SM umfasst steuerbare Halbleiterschalter, z.B. IGBT oder dergleichen (ein Vollbrücken-Schaltmodul mindestens vier Halbleiterschalter, ein Halbbrücken-Schaltmodul mindestens zwei Halbleiterschalter) einen Energiespeicher (zum Beispiel in Form eines Kondensators) sowie eine Steuerungsbaugruppe, mittels der die Halbleiterschalter angesteuert werden können. Bezüglich des Aufbaus der genannten Beispiele für Schaltmodule wird hiermit auf die bereits genannte Druckschrift WO 2020/125968 A1 verwiesen.

Der Stromrichter 2 umfasst ferner eine zentrale Regelungseinrichtung 13, die zum Regeln des MMC 2 (bzw. entsprechender Regelungsgrößen) und zum Ansteuern der Schaltmodule SM eingerichtet ist. Die Regelungseinrichtung 13 erhält von einer übergeordneten Instanz Vorgaben bezüglich der geforderten Wirkleistung und Blindleistung, die von der Regelungseinheit in Sollwerte von Regelungsparametern, z.B. von Spannung und Strom umgesetzt werden. Die Regelungsparameter können somit insbesondere eine wechselspannungsseitige Spannung Uac, ein wechselspannungsseitiger Strom Iac, ein gleichspannungsseitiger Strom Idc und/oder eine gleichspannungsseitige Spannung Udc sein. Eine Eingangsimpedanz Ze des Stromrichters ergibt sich aus Ze = Uac/Iac. In einem Stromrichter, der als ein symmetrischer Monopol konzipiert ist, können eine Spannung Udc+ zwischen dem positiven Gleichspannungspol und dem Erdpotenzial und eine Spannung Udc- zwischen dem negativen Gleichspannungspol und dem Erdpotenzial von Bedeutung sein. Im hier dargestellten Beispiel sind der Armstrom (der durch einen der Stromrichterarme fließende Strom) jeweils die Regelgröße und die Armspannung entsprechend die Stellgröße der Stromrichterregelung.

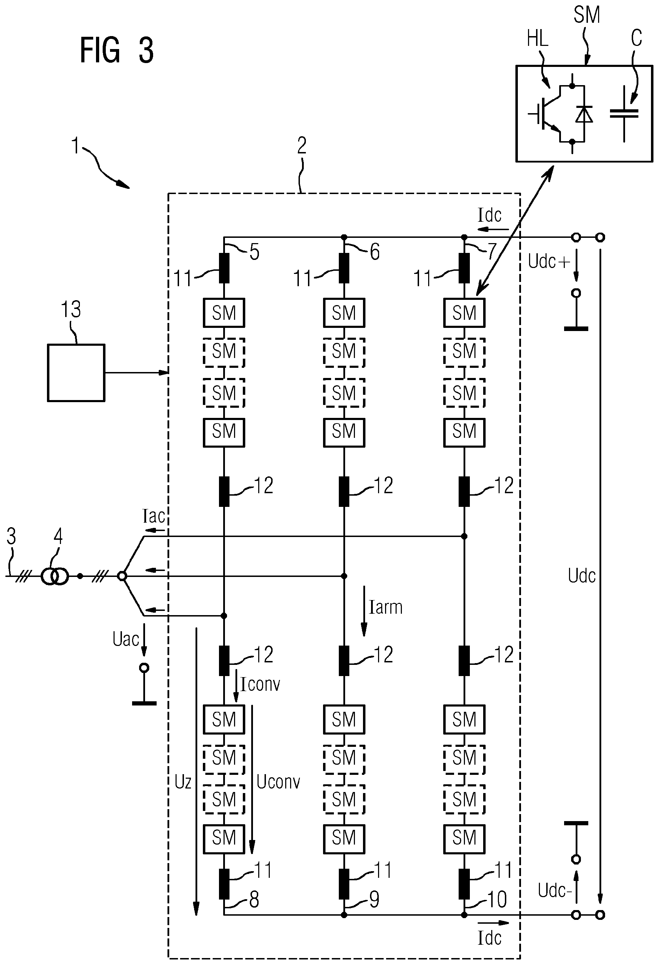

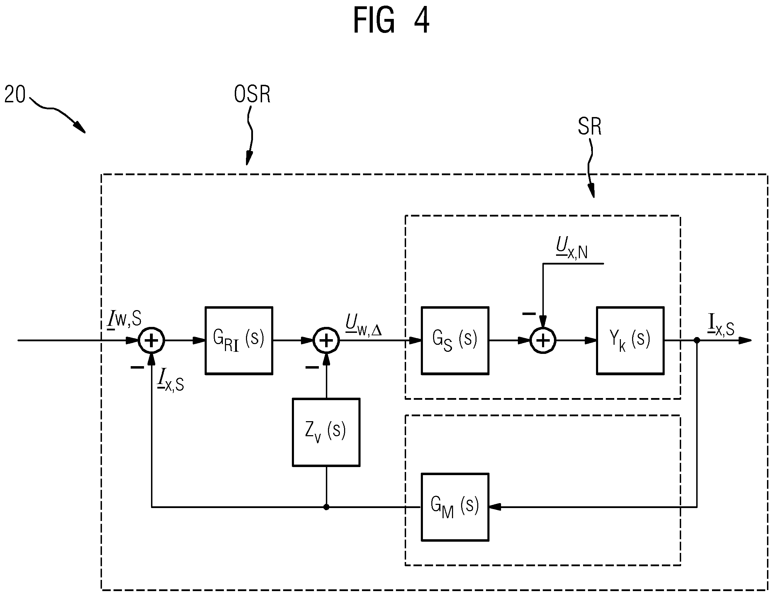

In Figur 4 ist eine Regelungseinrichtung 20 dargestellt, die als Regelungseinrichtung 13 der Figur 3 einsetzbar ist. Die Regelungseinrichtung 20 ist zum Durchführen des im folgenden beschriebenen Verfahrens eingerichtet. Um den wechselspannungsseitigen Strom zu regeln, wird ein wechselspannungsseitiger Sollstrom Iw,S vorgegeben. Mittels einer Messeinrichtung GM(s), wobei die Variablenabhängigkeit (s) stets angibt, dass Berechnungen im Laplace-Raum durchgeführt werden, wird ein wechselspannungsseitiger Iststrom Ix,S bereitgestellt. Eine Differenz zwischen dem Sollstrom und dem Iststrom wird an einen Grundschwingungs-Stromregler GRI(s) übermittelt, der ausgangsseitig eine Stellspannung bereitstellt.

Der wechselspannungsseitige Iststrom Ix,S wird ferner an ein Impedanzmodul Zv(s) zum Erzeugen einer virtuellen Impedanz übermittelt. Mittels des Impedanzmoduls Zv(s), in dem eine Impedanzfunktion implementiert ist, wird unter Vorgabe eines Frequenzbereiches dem eingangsseitig bereitgestellten Iststrom Ix,S ausgangsseitig ein Korrekturwert (eine Korrekturspannung) zugeordnet. Diese Korrekturspannung wird zur Stellspannung hinzuaddiert, wodurch sich eine Sollspannung des Modulators Uw,Delta ergibt. Diese wird an einen stromrichterinternen Modulator bzw. Spannungssteller Gs(s) übermittelt. Der Modulator Gs(s) übersetzt die Stellspannung (bzw. Stellspannungen für jeden Stromrichterarm) in Schaltbefehle für die Halbleiterschalter der Schaltmodule, z.B. falls der Stromrichter ein MMC ist.

Eine auf diese Weise am Stromrichter eingestellte Spannung ergibt in Zusammenwirkung mit einer wechselspannungsseitigen Spannung Ux,N und einer Admittanz Yk(s) des AC-Systems einen wechselspannungsseitigen Strom Ix,S.

Eine mögliche Implementierung der frequenzselektiven virtuellen Impedanz kann wie folgt realisiert werden. Mittels einer Tiefpass-Bandpass Transformation wird ein wirksamer Frequenzbereich vorgegeben. Vorzugweise liegt dabei die gesamte Bandbreite der virtuellen Impedanz im Bereich von 5 Hz bis 200 Hz. Der Strom wird mittels einer geeigneten Transformation in ein ruhendes Koordinatensystem überführt. Zugleich kann eine Totzeitkompensation durchgeführt werden. Mittels einer Impedanzfunktion werden dann im ruhenden Koordinatensystem dem Strom unabhängig voneinander die Anteile der Korrekturwerte für das Mitsystem und das Gegensystem zugeordnet.

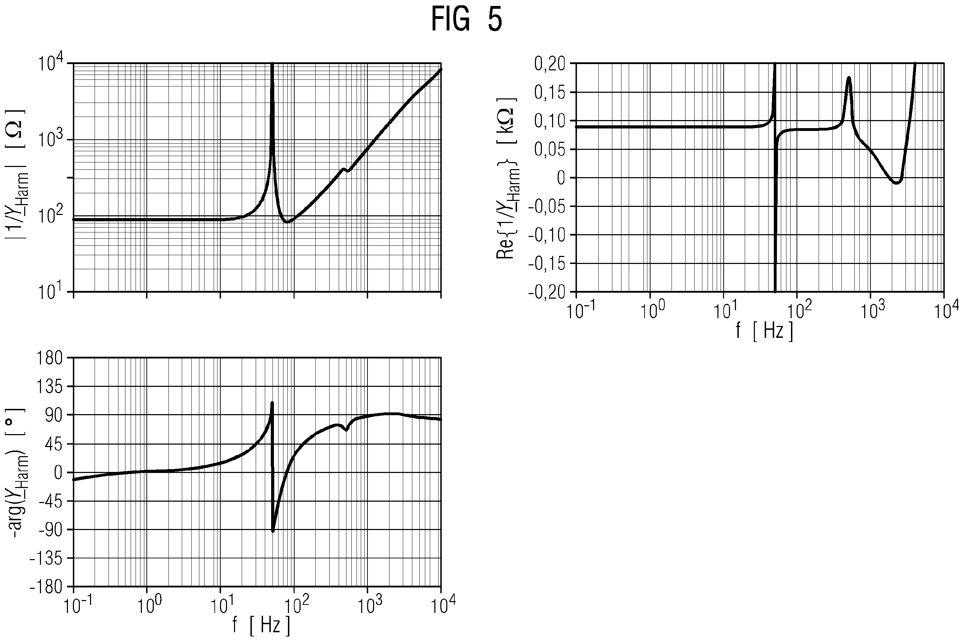

In Figur 5 sind Diagramme dargestellt, die den Verlauf der Eingangsimpedanz (bzw. den Kehrwert der entsprechenden Admittanz) in Abhängigkeit von der Frequenz zeigt (jeweils den Betrag, das Argument sowie den Realteil in eigenen Diagrammen), wobei die Eingangsimpedanz mittels eines erfindungsgemäßen Verfahrens modifiziert wurde. Im dargestellten Beispiel ist es die Eingangsimpedanz eines HVDC Umrichters (incl. Transformator) im ruhenden Koordinatensystem aus Sicht des Wechselspannungsnetzes. Erkennbar ist die Wirkung der Modifikation mittels der virtuellen Impedanz im Frequenzbereich um 500 Hz. Insbesondere ist eine Anhebung des Realteils der Eingangsimpedanz bei 500Hz mit einer Bandbreite von 200Hz um 100 Ohm ersichtlich. Das Mit- und Gegensystem sind in diesem Beispiel symmetrisch modifiziert.

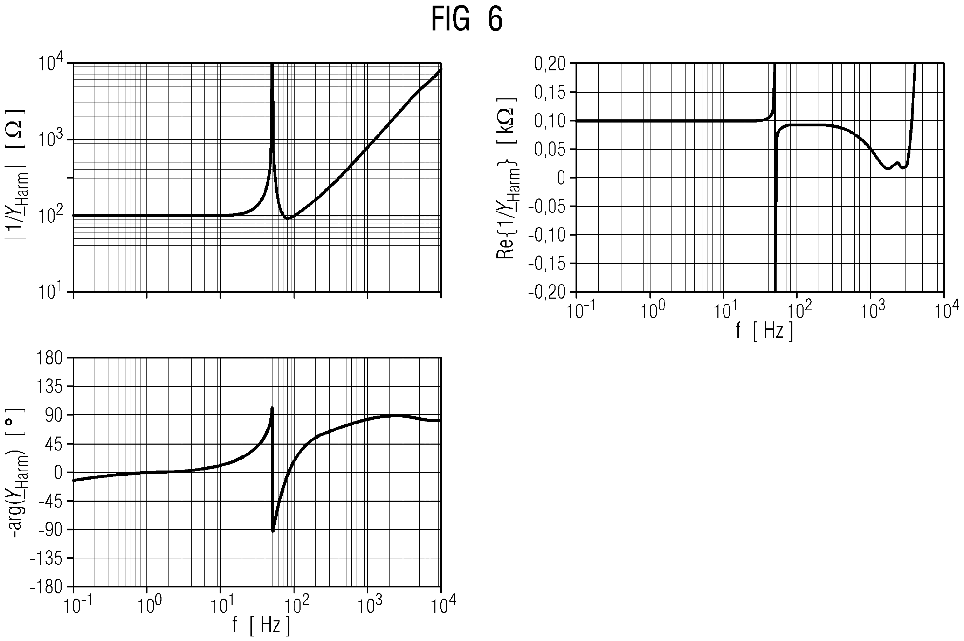

In Figur 6 sind Diagramme dargestellt, die den Verlauf der Eingangsimpedanz (bzw. den Kehrwert der entsprechenden Admittanz) in Abhängigkeit von der Frequenz zeigt (jeweils den Betrag, das Argument sowie den Realteil in eigenen Diagrammen), wobei die Eingangsimpedanz mittels eines erfindungsgemäßen Verfahrens modifiziert wurde. Im dargestellten Beispiel ist es die Eingangsimpedanz eines HVDC Umrichters (incl. Transformator) im ruhenden Koordinatensystem aus Sicht des Wechselspannungsnetzes. Erkennbar ist die Wirkung der Modifikation mittels der virtuellen Impedanz im Frequenzbereich um 2,3 kHz. Insbesondere ist eine Anhebung des Realteils der Eingangsimpedanz bei 2,3 kHz mit einer Bandbreite von 200Hz um 30 Ohm ersichtlich. Das Mit- und Gegensystem sind in diesem Beispiel jeweils durch eine durchgezogene bzw. unterbrochene Linie gekennzeichnet. Insbesondere wird durch die hier gezeigte Modifikation der Eingangsimpedanz eine Beseitigung eines negativen Realteils bei 2,3kHz erzielt.

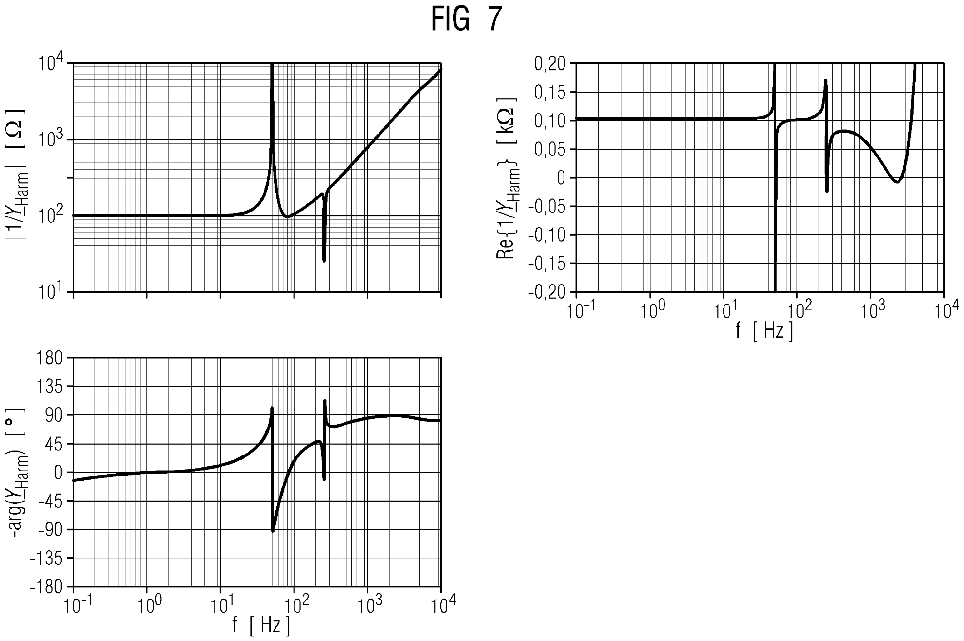

In Figur 7 sind Diagramme dargestellt, die den Verlauf der Eingangsimpedanz (bzw. den Kehrwert der entsprechenden Admittanz) in Abhängigkeit von der Frequenz zeigt (jeweils den Betrag, das Argument sowie den Realteil in eigenen Diagrammen), wobei die Eingangsimpedanz mittels eines erfindungsgemäßen Verfahrens modifiziert wurde. Im dargestellten Beispiel ist es die Eingangsimpedanz eines HVDC Umrichters (incl. Transformator) im ruhenden Koordinatensystem aus Sicht des Wechselspannungsnetzes. Erkennbar ist die Wirkung der Modifikation mittels der virtuellen Impedanz im Frequenzbereich um 250 Hz. Insbesondere ist hierbei die Impedanz bei 250 Hz derart reduziert worden, dass der Umrichter nahezu einen Kurzschluss darstellt. Das Mit- und Gegensystem sind in diesem Beispiel jeweils gleich modifiziert. Eine solche Vorgehensweise kann vorteilhaft zur Reduktion des Spannungs-THD (Total Harmonic Distortion) am Anschlusspunkt sinnvoll sein.

## Patentansprüche

1. Verfahren zum Betreiben eines Stromrichters (2), bei dem mittels einer passiven Regelungsreaktion, d.h. ohne eine Sollwertvorgabe eine Eingangsimpedanz (Ze) am Stromrichter (2) modifiziert wird, wobei zum Regeln eines Stromrichterstromes eine Stellspannung bestimmt wird, wobei die Stellspannung mittels einer Impedanzfunktion, die eine Zielvorgabe für die Eingangsimpedanz (Ze) enthält, um eine Korrekturspannung modifiziert wird, **gekennzeichnet dadurch dass** die Impedanzfunktion unter Vorgabe eines Frequenzbereiches einem eingangsseitig bereitgestellten Stromwert ausgangsseitig eine eindeutige Korrekturspannung zuordnet, die einer vorgegebenen Impedanz entspricht.

2. Verfahren nach Anspruch 1, wobei die Eingangsimpedanz (Ze) innerhalb eines vorbestimmten Frequenzbereiches modifiziert wird.

3. Verfahren nach Anspruch 2, wobei eine Mittenfrequenz des vorbestimmten Frequenzbereiches einem ganzzahligen Vielfachen einer Netzfrequenz entspricht.

4. Verfahren nach einem der vorangehenden Ansprüche, wobei das Modifizieren einem Erhöhen eines Realteils der Eingangsimpedanz entspricht.

5. Verfahren nach Anspruch 4, wobei der Realteil derart angehoben wird, dass der Realteil im gesamten vorgegebenen Frequenzbereich positive Werte annimmt.

6. Verfahren nach einem der vorangehenden Ansprüche, wobei das Modifizieren der Eingangsimpedanz zeitdynamisch wiederholt durchgeführt wird.

7. Verfahren nach einem der vorangehenden Ansprüche, wobei eine Mitsystemimpedanz und eine und Gegensystemimpedanz gleich modifiziert werden.

8. Verfahren nach einem der vorangehenden Ansprüche 1 bis 6, wobei eine Mitsystemimpedanz und eine Gegensystemimpedanz unterschiedlich modifiziert werden.

9. Stromrichter (2) mit einer Regelungseinrichtung (13), **dadurch gekennzeichnet, dass** die Regelungseinrichtung (13) zum Durchführen eines Verfahrens nach Anspruch 1 eingerichtet ist.

## Claims

1. Method for operating an inverter (2), in which an input impedance (Ze) at the inverter (2) is modified by means of a passive closed-loop control reaction, that is to say without a setpoint value specification, wherein a regulating voltage is determined for the closed-loop control of an inverter current, wherein the regulating voltage is modified by a correction voltage by means of an impedance function which contains a target specification for the input impedance (Ze), **characterized in that** the impedance function assigns a unique correction voltage, which corresponds to a prescribed impedance, on the output side to a current value provided on the input side with specification of a frequency range.

2. Method according to Claim 1, wherein the input impedance (Ze) is modified within a predetermined frequency range.

3. Method according to Claim 2, wherein a median frequency of the predetermined frequency range corresponds to an integer multiple of a network frequency.

4. Method according to one of the preceding claims, wherein the modification corresponds to an increase of a real part of the input impedance.

5. Method according to Claim 4, wherein the real part is raised in such a way that the real part adopts positive values in the total prescribed frequency range.

6. Method according to one of the preceding claims, wherein the modification of the input impedance is carried out repeatedly in a time-dynamic manner.

7. Method according to one of the preceding claims, wherein a positive-sequence impedance and a negative-sequence impedance are modified identically.

8. Method according to one of the preceding Claims 1 to 6, wherein a positive-sequence impedance and a negative-sequence impedance are modified differently.

9. Inverter (2) with a closed-loop control device (13), **characterized in that** the closed-loop control device (13) is designed to carry out a method according to Claim 1.

## Revendications

1. Procédé pour faire fonctionner un convertisseur (2), dans lequel, au moyen d'une réaction de régulation passive, c'est-à-dire sans prescription d'une valeur de consigne, on modifie une impédance (Ze) d'entrée du convertisseur (2), dans lequel, pour régler un courant de convertisseur, on détermine une tension de réglage, dans lequel on modifie d'une tension de correction la tension de réglage au moyen d'une fonction d'impédance, qui contient une prescription cible pour l'impédance (Ze) d'entrée, **caractérisé en ce que** la fonction d'impédance affecte, sous prescription d'une plage de fréquences, à une valeur de courant mise à disposition du côté de l'entrée une tension de correction univoque du côté de la sortie, qui correspondant à une impédance donnée à l'avance.

2. Procédé suivant la revendication 1, dans lequel on modifie l'impédance (Ze) d'entrée dans une plage de fréquences déterminée à l'avance.

3. Procédé suivant la revendication 2, dans lequel une fréquence médiane de la plage de fréquences déterminée à l'avance correspond à un multiple en nombre entier d'une fréquence du réseau.

4. Procédé suivant l'une des revendications précédentes, dans lequel la modification correspond à une augmentation d'une partie réelle de l'impédance d'entrée.

5. Procédé suivant la revendication 4, dans lequel on élève la partie réelle, de manière à ce que la partie réelle prenne des valeurs positives dans l'ensemble de la plage de fréquences donné à l'avance.

6. Procédé suivant l'une des revendications précédentes, dans lequel on effectue la modification de l'impédance d'entrée d'une manière répétée d'une façon dynamique dans le temps.

7. Procédé suivant l'une des revendications précédentes, dans lequel on modifie pareillement une impédance de système direct et une impédance de système inverse.

8. Procédé suivant l'une des revendications 1 à 6 précédentes, dans lequel on modifie différemment une impédance de système direct et une impédance de système inverse.

9. Convertisseur (2) ayant un dispositif (13) de régulation, **caractérisé en ce que**
le dispositif (13) de régulation est agencé pour effectuer un procédé suivant la revendication 1.
